# EUROPÄISCHE PATENTANMELDUNG

(11) **EP 2 455 828 A1**
(43) Veröffentlichungstag der Anmeldung: **23.05.2012**
(21) Anmeldenummer: 10191879.5
(22) Anmeldetag: 19.11.2010
(51) Int. Cl.: G05B 19/042

(54) **Feldgerät mit einem Energiesparmodus, der über ein Handbediengerät temporär deaktiviert werden kann**

(71) Anmelder: SIEMENS AKTIENGESELLSCHAFT, 80333 München (DE)
(72) Erfinder: Fritsch, Andreas, 92245 Kümmersbruck (DE); Gruber, Stefan, 92245 Kümmersbruck (DE); Koller, Josef, 93133 Burglengenfeld (DE); Schubert, Ralf, 92272 Freudenberg (DE); Spindler, Konrad, 92289 Ursensollen (DE)

(57) **Zusammenfassung**

Die Erfindung betrifft ein elektrisches Schaltgerät (3,4,5, 11) sowie ein Verfahren zum Steuern eines elektrischen Schaltgeräts (3,4,5,11). Um ein verbessertes Steuern eines elektrischen Schaltgerätes (3,4,5,11) zu ermöglichen wird vorgeschlagen, dass das elektrisches Schaltgerät (3,4,5,11) ein Handsteuermittel (10) und einen Busanschluss (13) zum Anschließen eines Bussystems umfasst, wobei das elektrische Schaltgerät (3,4,5,11) einen Betriebsmodus und einen Energiesparmodus einnehmen kann, wobei das elektrische Schaltgerät (3,4,5,11) derart ausgebildet ist, dass während eines Vorliegens des Energiesparmodus das elektrische Schaltgerät (3,4,5, 11) mittels des Handsteuermittels (10) den Betriebsmodus einnehmen kann, so dass das elektrische Schaltgerät (3,4,5,11) über das Handsteuermittel (10) steuerbar ist.

## Beschreibung

Die Erfindung betrifft ein elektrisches Schaltgerät sowie ein Verfahren zum Steuern eines elektrischen Schaltgeräts. Das elektrische Schaltgerät kommt insbesondere innerhalb der industriellen Automatisierungstechnik zum Einsatz und dient dem Steuern eines mit ihm verbundenen Verbrauchers.

Ein Verbraucher ist beispielsweise ein Motor. Das elektrische Schaltgerät kann beispielsweise ein Motorstarter oder Motorsteuergerät sein. Über das elektrische Schaltgerät kann der mit dem Schaltgerät verbundene Verbraucher gesteuert werden. Das Steuern kann hierbei entweder mittels eines Bussystems, welches mit einem Busanschluss des Schaltgeräts verbunden ist, oder mittels eines Handsteuermittels erfolgen.

Das Handsteuermittel umfasst beispielsweise ein Bedienelement und/oder Anschlussmittel über welches das elektrische Schaltgerät lokal "vor Ort" gesteuert werden kann.

Das Bussystem kann beispielsweise ein PROFINET-Bussystem sein. Hierbei ist beispielsweise eine übergeordnete Steuerung mittels PROFINET mit dem Schaltgerät, insbesondere mit dem Busanschluss des Schaltgerätes, verbunden. Über PROFINET kann folglich die übergeordnete Steuerung mit dem Schaltgerät kommunizieren, so dass die Steuerung via PROFINET das Schaltgerät und letztendlich den Verbraucher steuern kann.

Schaltgeräte, welche über PROFINET angesteuert werden, können ferner PROFIenergy kompatibel sein. PROFIenergy ist ein Profil für das Energiemanagement in Produktionsanlagen. PROFIenergy setzt auf dem Kommunikationsprotokoll PROFINET auf. Mittels PROFIenergy kann der Energieverbrauch von Automatisierungsequipment in der Fertigung (wie z.B. Roboter-Montagezellen, Laserschneideanlagen und Teilsystemen wie Lackieranlagen) gesteuert werden. Die Steuerung des Energieverbrauchs (z.B. des Schaltgerätes selbst) erfolgt über offene und standardisierte Kommandos, die auf geplante und ungeplante Unterbrechungen in der Fertigung angewandt werden.

Schaltgeräte, welche über PROFIenergy Kommandos angesprochen werden, können einen Betriebsmodus und einen Energiesparmodus einnehmen. Innerhalb des Betriebsmodus, welcher den "Arbeitsbetrieb" des Schaltgerätes darstellt, kann das elektrische Schaltgerät mittels des Bussystems oder mittels des Handsteuermittels gesteuert werden. Die Betriebsart (Steuerhoheit) wird beispielsweise mittels eines Drehschalters am Schaltgerät ausgewählt. Das Schaltgerät kann somit zentral über das Bussystem oder mittels des Handsteuermittels "vor Ort" gesteuert werden. Innerhalb des Energiesparmodus, welcher einen energetisch verbesserten Zustand des Schaltgerätes darstellt, kann das elektrische Schaltgerät energiesparende Zustände einnehmen. Es kann beispielsweise der mit dem elektrischen Schaltgerät verbundene Verbraucher für eine bestimmte Dauer deaktiviert werden. Mittels PROFIenergy können Energiesparmaßnahmen über standardisierte, herstellerunabhängige Kommandos eingeleitet werden.

Gemäß PROFIenergy-Festlegung kann das elektrische Schaltgerät lediglich über das Bussystem und somit von der übergeordneten Steuerung in den Energiesparmodus geschaltet werden. Wird nun beispielsweise eine Anlage, bestehend aus einer Steuerung, einem Verbraucher und einem Schaltgerät, welches den Verbraucher steuert, betrachtet, so kann die Anlage, sofern die Steuerhoheit bei dem Bussystem und somit bei der Steuerung liegt in einen Energiesparmodus geschaltet werden. Das Schaltgerät nimmt den Energiesparmodus ein und schaltet beispielsweise den Verbraucher ab. Da sich das Schaltgerät im Energiesparmodus befindet, liegt die Steuerhoheit bei dem Bussystem. Eine Steuerung über das Handsteuermittel ist nicht möglich, da die Steuerhoheit bei dem Bussystem liegt. Dieser energiesparende Zustand kann gemäß PROFIenergy nur zentral über die Busanbindung per Kommando wieder aufgehoben werden. Möchte nun ein Anwender beispielsweise das Schaltgerät für Wartungszwecke, einen Testbetrieb oder einen Notlauf manuell über das Handsteuermittel steuern, so muss gemäß PROFIenergy über das Bussystem der Energiesparmodus am Schaltgerät aufgehoben werden.

Eine gezielte Wartung, ein lokaler Testbetrieb oder Notlaufszenarien können somit bei im Energiesparmodus befindlichen Anlagenteilen bzw. einzelnen Verbrauchern nicht über die lokale Steuerung "vor Ort" über das Handsteuermittel durchgeführt werden. Will ein Anwender diese Problematik umgehen, muss er gezielt Maßnahmen in seiner Anlagensteuerung integrieren, die es erlauben, einzelne Teile der Anlage (z.B. ein elektrisches Schaltgerät) aus dem übergeordneten Energiesparmodus herauszulösen. Dies hat für den Anwender eine Reihe von Nachteilen: erheblicher Entwicklungs- und Implementierungsaufwand, komplexere Abhängigkeiten und erhöhter Speicherbedarf für sein Anwenderprogramm.

Es ist Aufgabe der vorliegenden Erfindung ein verbessertes Steuern eines elektrischen Schaltgerätes zu ermöglichen.

Insbesondere soll ein Steuern des elektrischen Schaltgeräts aus einem Energiesparmodus des elektrischen Schaltgeräts heraus durch Nutzung des Handsteuermittels ermöglicht werden.

Insbesondere soll ein Steuern des elektrischen Schaltgerätes, welches insbesondere mittels PROFIenergy in den Energiesparmodus geschaltet ist über das Handsteuermittel ermöglicht werden, ohne dass ein Befehl über das Bussystem erfolgen muss.

Mindestens eine dieser Aufgaben wird gelöst durch eine Vorrichtung gemäß Anspruch 1, d.h. durch ein elektrisches Schaltgerät, welches ein Handsteuermittel und einen Busanschluss zum Anschließen eines Bussystems umfasst, wobei das elektrische Schaltgerät einen Betriebsmodus und einen Energiesparmodus einnehmen kann, wobei das elektrische Schaltgerät derart ausgebildet ist, dass während eines Vorliegens des Energiesparmodus das elektrische Schaltgerät mittels des Handsteuermittels den Betriebsmodus einnehmen kann, so dass das elektrische Schaltgerät über das Handsteuermittel steuerbar ist, und ein Verfahren gemäß Anspruch 11, d.h. durch ein Verfahren zum Steuern eines elektrischen Schaltgeräts, welches ein Handsteuermittel und einen Busanschluss zum Anschließen eines Bussystems umfasst, wobei das elektrische Schaltgerät einen Betriebsmodus und einen Energiesparmodus einnehmen kann, wobei das elektrische Schaltgerät mittels des Bussystems in den Energiesparmodus geschaltet wird und aus dem Energiesparmodus über das Handsteuermittel in den Betriebsmodus geschaltet wird, so dass während des Betriebsmodus eine Steuerung des elektrischen Schaltgeräts mittels des Handsteuermittels erfolgen kann.

Vorteilhafte Weiterbildungen der Erfindung sind in den abhängigen Ansprüchen 2 bis 10 sowie 12 bis 16 angegeben.

Der mit der Erfindung erzielte Vorteil besteht darin, dass ein Anwender bei Vorliegen des Energiesparmodus ebenso das Schaltgerät direkt über das Handsteuermittel steuern kann. Er kann somit direkt vor Ort das elektrische Schaltgerät steuern und muss hierfür nicht über das Bussystem das elektrische Schaltgerät in den Betriebsmodus schalten.

Das elektrische Schaltgerät ist insbesondere ein Motorsteuergerät oder ein Motorstarter.

Im Betriebsmodus ist das elektrische Schaltgerät mittels des angeschlossenen Bussystems oder mittels des Handsteuermittels steuerbar. Die Steuerhoheit liegt hierbei entweder bei dem Bussystem oder bei dem Handsteuermittel. Vorzugsweise kann keine "gemischte Steuerung" innerhalb des Betriebsmodus erfolgen, d.h. die Steuerung erfolgt entweder vollständig über das Bussystem oder über das Handsteuermittel. Vorzugsweise kann mittels eines Bedienelements (z.B. Drehschalter) am Schaltgerät, insbesondere am Handsteuermittel, oder mittels des Bussystems eine jeweilige Betriebsart (Steuerung mittels Bussystem oder Steuerung mittels Handsteuermittel) gewählt werden. Während des Betriebsmodus ist durch das Bussystem oder das Handsteuermittel der mit dem elektrischen Schaltgerät verbundene Verbraucher steuerbar. Das elektrische Schaltgerät ist über das Bussystem in den Energiesparmodus schaltbar. Während des Energiesparmodus kann nun das elektrische Schaltgerät direkt über das Handsteuermittel den Betriebsmodus mit Steuerhoheit bei dem Handsteuermittel (temporärer Betriebsmodus) einnehmen, so dass eine Steuerung des elektrischen Schaltgeräts mittels des Handsteuermittels erfolgen kann.

Durch den vom Handsteuermittel veranlassten Wechsel vom Energiesparmodus in den Betriebsmodus wird am Schaltgerät eine direkte Steuerung über das Handsteuermittel ermöglicht. Eine gezielte Wartung, ein lokaler Testbetrieb oder Notlaufszenarien können somit trotz vorangegangener Schaltung des Schaltgerätes in den Energiesparmodus über das Handsteuermittel durchgeführt werden. Dies stellt einen erheblichen Bedienvorteil gegenüber den herkömmlichen Lösungen dar, da üblicherweise zunächst über das Bussystem der Energiesparmodus verlassen werden musste, um eine manuelle Steuerung über das Handsteuermittel zu ermöglichen. Der vom Handsteuermittel veranlasste Wechsel vom Energiesparmodus in den Betriebsmodus stellt einen temporären Betriebszustand des Schaltgeräts dar.

In einer vorteilhaften Ausführungsform der vorliegenden Erfindung ist das elektrische Schaltgerät derart ausgebildet, dass bei einem Verlassen des aus dem Energiesparmodus durch das Handsteuermittel eingenommenen Betriebsmodus das elektrische Schaltgerät automatisch einen aktuell durch das Bussystem bestimmten Modus einnimmt.

Wird das Schaltgerät während des Vorliegens des Energiesparmodus durch das Handsteuermittel in den Betriebsmodus geschaltet, so dass eine Steuerung über das Handsteuermittel möglich ist, so liegt die Steuerhoheit lediglich bei dem Handsteuermittel. Der Wechsel vom Energiesparmodus zum Betriebsmodus über das Handsteuermittel (temporärer Betriebsmodus) kann vorzugsweise über das Handsteuermittel herbeigeführt werden. Es kann beispielsweise mittels eines Schlüsselschalters oder Drehschalters des Handsteuermittels der Wechsel in den temporären Betriebsmodus oder aus dem temporären Betriebsmodus heraus veranlasst werden. Während des aus dem Energiesparmodus durch das Handsteuermittel eingenommenen Betriebsmodus werden die über das Bussystem am Schaltgerät eingehenden Steuerkommandos vorzugsweise nicht an den Verbraucher weitergegeben, da die Steuerhoheit während des aus dem Energiesparmodus durch das Handsteuermittel eingenommenen Betriebsmodus bei dem Handsteuermittel liegt. Diese Steuerkommandos (vom Bussystem) werden vorzugsweise im Schaltgerät hinterlegt, so dass ein aktuell durch das Bussystem bestimmter Modus im Schaltgerät hinterlegt ist.

Der temporäre Betriebsmodus, welcher einem Energiesparmodus entstammt, kann vorzugsweise lediglich mittels des Handsteuermittels (z.B. über einen Schlüsselschalter des Handsteuermittels) verlassen werden. Bei einem Verlassen des temporären Betriebsmodus wird automatisch der aktuell durch das Bussystem bestimmte Modus des elektrischen Schaltgerätes eingenommen. Der temporäre Betriebsmodus, bei welchem die Steuerhoheit bei dem Handsteuermittel liegt, wird somit verlassen und der aktuell vom Bussystem bestimmte Modus wird eingenommen.

Insbesondere können bei einem Verlassen des aus einem Energiesparmodus durch das Handsteuermittel herbeigeführten Betriebsmodus folgende Szenarien entstehen:
- Erfolgte beispielsweise während des Verlassens des Energiesparmodus durch das Handsteuermittel und anschließende Verlassen des Betriebsmodus mittels des Handsteuermittels keine Zustandsänderung bezüglich des über das Bussystem bestimmten Energiesparmodus, so wird der unmittelbar vor Verlassen des Energiesparmodus vorliegende Energiesparmodus erneut eingenommen.
- Erfolgt beispielsweise während des aus dem Energiesparmodus durch das Handsteuermittel herbeigeführten Betriebsmodus durch das Bussystem ein Befehl an das Schaltgerät, dass dieses in den Betriebsmodus geschaltet werden soll, so ist der Betriebsmodus mit Steuerhoheit beim Bussystem der aktuell durch das Bussystem bestimmte Modus. Dieser Modus (Betriebsmodus durch Bussystem) wird während des vom Handsteuermittel herbeigeführten Betriebsmodus nicht aktiviert, da zunächst die Steuerhoheit beim Handsteuermittel liegt. Erst bei einem Verlassen des vom Handsteuermittel gesteuerten "temporären" Betriebsmodus wird automatisch der durch das Bussystem aktuell bestimmte Modus, nämlich der Betriebsmodus mit Steuerhoheit beim Bussystem, eingenommen. Die Steuerhoheit liegt folglich nach einem Verlassen des Betriebsmodus des Handsteuermittels wieder bei dem Bussystem.
- Erfolgt beispielsweise während des aus dem Energiesparmodus durch das Handsteuermittel herbeigeführten Betriebsmodus durch das Bussystem ein Befehl an das Schaltgerät, dass dieses eine Änderung bezüglich des innegehabten Energiesparmodus einnehmen soll (es wird z.B. eine andere Energiesparvariante ausgewählt), so ist der geänderte Energiesparmodus der aktuell durch das Bussystem bestimmte Modus. Dieser Modus (geänderter Energiesparmodus) wird während des vom Handsteuermittel herbeigeführten Betriebsmodus nicht aktiviert, da zunächst die Steuerhoheit beim Handsteuermittel liegt. Erst bei einem Verlassen des vom Handsteuermittel gesteuerten Betriebsmodus wird automatisch der durch das Bussystem aktuell bestimmte Modus, nämlich der geänderte Energiesparmodus, eingenommen. Die Steuerhoheit liegt folglich nach einem Verlassen des Betriebsmodus des Handsteuermittels wieder bei dem Bussystem.

Der aktuelle Modus wird somit durch das Bussystem bestimmt und fortlaufend aktualisiert. Dies kann weiterhin der Energiesparmodus (der gleiche oder eine geänderte Energiesparvariante des Energiesparmodus) oder der Betriebsmodus (mit den Einstellungen gemäß dem Bussystem) sein. Es wird somit bei Verlassen des Betriebsmodus, welcher aus einem Energiesparmodus geschaltet wurde, der aktuell durch das Bussystem bestimmte Modus des elektrischen Schaltgerätes eingenommen.

In einer weiteren vorteilhaften Ausführungsform der vorliegenden Erfindung ist das elektrische Schaltgerät dazu ausgebildet, dass bei einem Übergang vom Betriebsmodus in den Energiesparmodus mindestens eine Komponente des elektrischen Schaltgeräts oder ein mit dem elektrischen Schaltgerät verbundener Verbraucher abgeschaltet wird. Während des Energiesparmodus sind im Vergleich zum Betriebsmodus energiereduzierende Maßnahmen durchgeführt worden, so dass ein verminderter Energieverbrauch durch das Schaltgerät selbst und/oder ein mit ihm verbundener Verbraucher vorliegt. Während des Energiesparmodus ist insbesondere das elektrische Schaltgerät weiterhin am Bussystem angemeldet. Insbesondere kann weiterhin zwischen der übergeordneten Steuerung und dem elektrischen Schaltgerät kommuniziert werden. Der Betriebsmodus stellt insbesondere den Arbeitsbetrieb des elektrischen Schaltgerätes dar. Ist beispielsweise absehbar, dass der mit dem Schaltgerät verbundene Verbraucher für eine absehbare Zeit (z.B. wegen einer Mittagspause oder eines Wochenendes) nicht den Arbeitsbetrieb aufweisen muss, so kann ein Anwender über das Bussystem den Energiesparmodus aktivieren. Das elektrische Schaltgerät führt daraufhin energiesparende Maßnahmen durch und wechselt somit in den Energiesparmodus. Es wird beispielsweise der Verbraucher deaktiviert und/oder Komponenten des elektrischen Schaltgerätes werden deaktiviert. Während des Energiesparmodus ist das elektrische Schaltgerät vorzugsweise weiterhin am Bussystem angemeldet, so dass es Kommandos vom Bussystem empfangen kann.

In einer weiteren vorteilhaften Ausführungsform der vorliegenden Erfindung kann der Energiesparmodus mehrere Energiesparvarianten umfassen und durch das Bussystem ist gezielt eine Energiesparvariante ansteuerbar. Durch das Bussystem können somit unterschiedliche Energiesparvarianten angesteuert werden. Es kann beispielsweise in Abhängigkeit der angestrebten Dauer des Energiesparmodus gezielt eine Energiesparvariante ausgewählt werden. Die Dauer kann beispielsweise ein Wochenende oder eine Mittagspause abbilden, so dass es eine Energiesparvariante für das Wochenende und eine Energiesparvariante für eine Mittagspause gibt. Bei der Energiesparvariante über das Wochenende werden vorzugsweise im Vergleich zur Energiesparvariante über die Mittagspause energiesparendere Maßnahmen eingeleitet. Ein Anwender kann somit gezielt eine passende Energiesparvariante auswählen und den Energiesparmodus am Schaltgerät über das Bussystem aktivieren. In einer Energiesparvariante wird beispielsweise der mit dem Schaltgerät verbundene Verbraucher abgeschaltet und in einer weiteren Energiesparvariante werden zusätzlich Komponenten des Schaltgerätes deaktiviert. Auf diese Weise kann ein äußerst energieeffizienter Betrieb einer Anlage, welche das elektrische Schaltgerät umfasst, erfolgen. Über das Handsteuermittel kann vorzugsweise die jeweilige Energiesparvariante und somit der Energiesparmodus verlassen werden. Ebenso ist es denkbar, dass die jeweilige Energiesparvariante die Dauer angibt, in welcher der Energiesparmodus aktiv sein soll.

Vorzugsweise ist über eine optische Anzeige des elektrischen Schaltgeräts ein vorliegen des Energiesparmodus anzeigbar.

In einer weiteren vorteilhaften Ausführungsform der vorliegenden Erfindung ist das elektrische Schaltgerät über ein standardisiertes, herstellerunabhängiges Kommunikationsprotokoll, insbesondere PROFIenergy, in den Energiesparmodus schaltbar. Insbesondere bei PROFIenergy ergibt sich das Problem, dass ein aktivieren sowie deaktivieren des Energiesparmodus lediglich über das Bussystem erfolgen kann. Dadurch, dass nun ein temporäres Verlassen des Energiesparmodus über das Handsteuermittel erfolgen kann, kann eine nutzerfreundliche verbesserte Bedienung des Schaltgerätes ermöglicht werden.

In einer weiteren vorteilhaften Ausführungsform der vorliegenden Erfindung ist über ein Schaltelement, insbesondere über einen Schlüsselschalter, des Handsteuermittels der Moduswechsel vom Energiesparmodus in den Betriebsmodus, in welchem eine Steuerung mittels des Handsteuermittels erfolgen kann, herbeiführbar. Durch das Schaltelement, insbesondere durch den Schlüsselschalter, kann vorzugsweise ein Verlassen des Energiesparmodus in den "temporären'" Betriebsmodus herbeigeführt werden, so dass eine Steuerung über das Handsteuermittel erfolgen kann. Das Schaltelement kann ebenso beispielsweise ein Drehschalter sein. Vorzugsweise wird das Schaltelement sowohl während des Betriebsmodus als auch während des Energiesparmodus zur Bestimmung der Steuerhoheit am elektrischen Schaltgerät verwendet. Während des Energiesparmodus kann die Steuerhoheit vom Bussystem an das Handsteuermittel übergeben werden. Hierbei findet jedoch ein Wechsel vom Energiesparmodus in den "temporären" Betriebsmodus mit der Steuerhoheit Handsteuermittel statt.

Vorzugsweise umfasst das Handsteuermittel ein Bedienelement, wie beispielsweise einen Taster, welcher am elektrischen Gerät angebracht ist, so dass hierüber der Verbraucher steuerbar ist. Ist der Verbraucher beispielsweise ein Motor, so ist über das Handsteuermittel und insbesondere über das Bedienelement beispielsweise die Drehrichtung des Motors, sowie das Starten und/oder Bremsen des Motors steuerbar, z.B. Motor-rechts, Motor-links, Bremse.

In einer weiteren vorteilhaften Ausführungsform der vorliegenden Erfindung umfasst das Handsteuermittel ein Anschlussmittel, zum Anschließen eines weiteren Gerätes. Das Anschlussmittel umfasst vorzugsweise mindestens einen digitalen Eingang und/oder eine lokale Schnittstelle.

Über den digitalen Eingang kann beispielsweise ein Aktor und/oder ein Sensor an das elektrische Gerät angeschlossen werden, so dass hierüber eine Steuerung des elektrischen Gerätes erfolgen kann.

Über die lokale Schnittstelle des Anschlussmittels können insbesondere ein Handbediengerät und/oder ein Laptop mit dem elektrischen Gerät verbunden werden, so dass hierüber eine Steuerung des elektrischen Gerätes erfolgen kann. Hierbei ist vorzugsweise das Handbediengerät und/oder der Laptop mittels einer Punkt zu Punkt Verbindung mit dem elektrischen Schaltgerät über die lokale Schnittstelle verbunden. Die Steuerung über den Laptop erfolgt insbesondere über ein Engineering Tool. Ist das Schaltgerät ein Motorstarter, so kann das Engineering Tool beispielsweise "Motorstarter ES" sein.

Das Anschlussmittel bildet insbesondere eine Schnittstelle zu einem Bedienelement, über welches das elektrische Schaltgerät und somit der angeschlossene Verbraucher steuerbar ist. Ein Bussystem kann nicht unmittelbar mit dem Anschlussmittel oder dem Handsteuermittel verbunden werden.

Über das Handsteuermittel kann vorzugsweise das elektrische Schaltgerät sowohl während des "temporären" Betriebsmodus mit der Steuerhoheit beim Handsteuermittel als auch während des gewöhnlichen Betriebsmodus gleichwertig gesteuert werden.

In einer weiteren vorteilhaften Ausführungsform der vorliegenden Erfindung ist das elektrische Schaltgerät ein Motorsteuergerät oder ein Motorstarter. Mittels des Motorsteuergerätes oder Motorstarters kann insbesondere ein mit dem Motorsteuergerät verbundener Motor gesteuert werden. Die Steuerung kann über das Bussystem und/oder das Handsteuermittel erfolgen. Hierbei ist insbesondere der Motor ein und ausschaltbar.

In einer weiteren vorteilhaften Ausführungsform der vorliegenden Erfindung ist das Bussystem ein PROFINET-Bussystem. Vorzugsweise können über das Bussystem PROFIenergy Kommandos ausgetauscht werden, so dass am Schaltgerät der Energiesparmodus aktivierbar oder deaktivierbar ist.

In einer weiteren vorteilhaften Ausführungsform der vorliegenden Erfindung umfasst das elektrische Schaltgerät eine Verarbeitungseinheit, welche dazu ausgebildet ist, Steuerkommandos des Bussystems und/oder des Handsteuermittels zu verarbeiten und das elektrische Schaltgerät innerhalb des Betriebsmodus und des Energiesparmodus zu steuern. Die Verarbeitungseinheit umfasst beispielsweise einen Mikrocontroller. Die Verarbeitungseinheit kann somit während des Betriebsmodus den Energiesparmodus und insbesondere die jeweilige Energiesparvariante aktivieren und deaktivieren. Ebenso wird über die Verarbeitungseinheit der temporäre Betriebsmodus gesteuert.

In einer weiteren vorteilhaften Ausführungsform der vorliegenden Erfindung nimmt das elektrische Schaltgerät bei einem Verlassen des aus dem Energiesparmodus durch das Handsteuermittel eingenommenen Betriebsmodus automatisch einen aktuell durch das Bussystem bestimmten Modus des elektrischen Schaltgerätes ein. Je nachdem welcher Modus beim Verlassen des "temporären Betriebsmodus" durch das Bussystem bestimmt ist wird das Schaltgerät automatisch in den Energiesparmodus oder den Betriebsmodus geschaltet. Die Steuerhoheit liegt nach dem verlassen des "temporären Betriebsmodus" erneut bei dem Bussystem. Der "temporäre Betriebsmodus" ist ein Betriebsmodus, welcher aus einem Energiesparmodus herbeigeführt wurde und in welchem die Steuerhoheit bei dem Handsteuermittel liegt.

In einer weiteren vorteilhaften Ausführungsform der vorliegenden Erfindung wird bei einem Übergang vom Betriebsmodus in den Energiesparmodus mindestens eine Komponente des elektrischen Schaltgeräts oder ein mit dem elektrischen Schaltgerät verbundener Verbraucher abgeschaltet.

In einer weiteren vorteilhaften Ausführungsform der vorliegenden Erfindung umfasst der Energiesparmodus mehrere Energiesparvarianten und durch das Bussystem ist gezielt eine Energiesparvariante ansteuerbar.

In einer weiteren vorteilhaften Ausführungsform der vorliegenden Erfindung wird über ein Schaltelement, insbesondere über einen Schlüsselschalter, des Handsteuermittels der Moduswechsel vom Energiesparmodus in den Betriebsmodus, in welchem eine Steuerung mittels des Handsteuermittels erfolgen kann, herbeigeführt. Durch das Schaltelement kann vorzugsweise ein Übergang vom Energiesparmodus in den "temporären" Betriebsmodus herbeigeführt werden, so dass eine Steuerung über das Handsteuermittel erfolgen kann.

In einer weiteren vorteilhaften Ausführungsform der vorliegenden Erfindung ist das elektrische Schaltgerät über ein herstellerunabhängiges Kommunikationsprotokoll, insbesondere PROFIenergy, in den Energiesparmodus schaltbar.

Im Sinne der Anmeldung wird unter den Begriff Bussystem ebenso ein IO-Link Mastersystem gesehen. In diesem Fall würde der Busanschluss ein Anschließen einer IO-Link Leitung an das elektrische Schaltgerät ermöglichen. Eine IO-Link Masterbaugruppe wäre somit über eine IO-Link Leitung mit dem Busanschluss des elektrischen Schaltgerätes verbunden, so dass mittels der IO-Link Masterbaugruppe eine "Bussteuerung" des elektrischen Schaltgerätes erfolgen kann.

Der Busanschluss ermöglicht insbesondere ein Anschließen mittels IO-Link, PROFIBUS, PROFINET oder ASI.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung eines elektrischen Schaltgerätes, und
- FIG 2: eine schematische Darstellung einer Anlage.

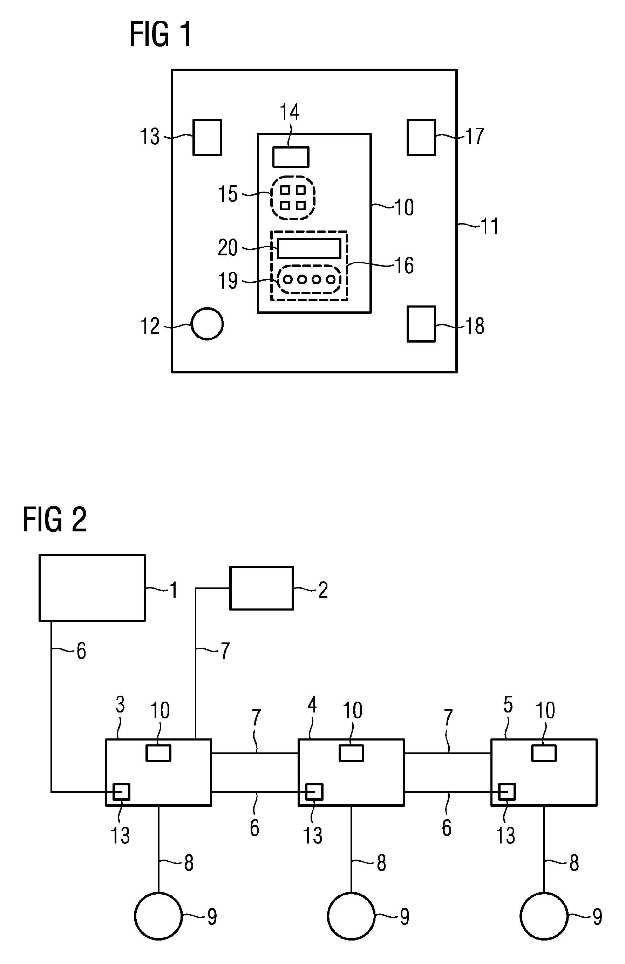

FIG 1 zeigt eine schematische Darstellung eines elektrischen Schaltgerätes 11. Das elektrische Schaltgerät 11 ist in diesem Ausführungsbeispiel beispielsweise ein Motorstarter 11 über welchen ein mit ihm verbundener Verbraucher steuerbar ist. Der Motorstarter 11 umfasst einen Busanschluss 13, eine optische Anzeige 12, ein Handsteuermittel 10, einen Energieversorgungsanschluss 17 und einen Verbraucheranschluss 18.

Der Motorstarter 11 kann mit einer übergeordneten Steuerung (z.B. SPS) verbunden werden, so dass er hierüber gesteuert werden kann. Diese Verbindung erfolgt über ein Bussystem, wie beispielsweise das PROFINET-Bussystem. Hierfür weist der Motorstarter 11 den Busanschluss 13 auf. Die übergeordnete Steuerung kann mittels einer Bussystemleitung (z.B. PROFINET-Leitung) mit dem Busanschluss 13 verbunden werden, so dass der Motorstarter 11 mit dem Bussystem gekoppelt ist. Die Kommunikation zwischen der Steuerung und dem Motorstarter 11 kann somit beispielsweise mittels PROFINET und insbesondere mittels PROFIenergy Kommandos erfolgen.

Über den Energieversorgungsanschluss 17 erfolgt eine Energieversorgung des Motorstarters 11.

Über den Verbraucheranschluss 18 wird der Verbraucher mit dem Motorstarter 11 verbunden. Der Verbraucher kann über den Verbraucheranschluss 18 des Motorstarters 11 unterschiedlich angesteuert werden, so dass das Verhalten des Verbrauchers beeinflusst und somit gesteuert werden kann. Der Verbraucher ist insbesondere ein Motor. Der Motorstarter 11 kann insbesondere die Drehrichtung sowie das Anlauf und Bremsverhalten des Motors steuern.

Der Motorstarter 11 kann zum Einen einen Betriebsmodus und zum Anderen einen Energiesparmodus einnehmen. Der Betriebsmodus stellt den Arbeitsbetrieb des Motorstarters dar, innerhalb welchem er vorzugsweise die vollständige Steuermöglichkeit über das Bussystem und/oder das Handsteuermittel entfaltet. Während des Betriebsmodus liegt üblicherweise ein Arbeitsbetrieb des mit dem elektrischen Schaltgerät verbundenen Verbrauchers vor. Innerhalb des Energiesparmodus weist der Motorstarter 11 im Vergleich zum Betriebsmodus einen energetisch verbesserten Zustand auf. Es ist beispielsweise der mit dem Motorstarter 11 verbundene Verbraucher deaktiviert und/oder Hardwarekomponenten des Motorstarters 11 sind abgeschaltet. Über die optische Anzeige 12 wird der aktuelle Modus (Betriebsmodus/Energiesparmodus) des Motorstarters 11 angezeigt. Während des Betriebsmodus liegt die Steuerhoheit des Motorstarters 11 entweder bei dem Bussystem und somit bei der über den Busanschluss 13 mit dem Motorstarter 11 verbundenen übergeordneten Steuerung, oder bei dem Handsteuermittel 10, über welches der Motorstarter unmittelbar vor Ort gesteuert werden kann.

Das Handsteuermittel 10 umfasst ein Schaltelement 14, ein Bedienelement 15 und ein Anschlussmittel 16.

Das Schaltelement 14 umfasst beispielsweise einen Drehschalter. Über diesen Drehschalter kann die Betriebsart "Bussystem" und die Betriebsart "Hand" ausgewählt werden. Bei der Betriebsart "Bussystem" liegt die Steuerhoheit bei dem Bussystem, so dass der Motorstarter 11 mittels einer über den Bus mit ihm verbundenen Steuerung (SPS) gesteuert wird. Bei der Betriebsart "Hand" liegt die Steuerhoheit beim Handsteuermittel 10.

Das Bedienelement 15 umfasst beispielsweise mehrere Taster, über welche der Motorstarter 11 unmittelbar vor Ort gesteuert werden kann. Über das Bedienelement 15 kann somit die Steuerung des mit dem Motorstarter 11 verbundenen Motors erfolgen. Es kann beispielsweise ein Rechtslauf, ein Linkslauf oder ein Bremsen des Motors veranlasst werden.

Die Anschlussmittel 16 umfassen digitale Eingänge 19 und/oder eine lokale Schnittstelle 20. Über die digitalen Eingänge 19 können beispielsweise Aktoren und/oder Sensoren mit dem Motorstarter 11 verbunden werden. Diese Aktoren und/oder Sensoren können beispielsweise Messsignale an den Motorstarter 11 senden, so dass hierüber eine gezielte Steuerung des Motorstarters 11 erfolgen kann. An die lokale Schnittstelle 20 des Motorstarters 11 ist insbesondere ein Handbediengerät und/oder ein Laptop anschließbar. Über den Laptop kann beispielsweise mittels eines Engineering Tools (Motorstarter ES) der Motorstarter 11 gesteuert werden.

Die Steuerung des Motorstarters ist somit über das Handsteuermittel 10, insbesondere über das Schaltelement 14 und das Bedienelement 15 oder das Anschlussmittel 16 möglich.

Über das Schaltelement 14 kann die Betriebsart und somit die Steuerhoheit am Motorsteuergerät 11 ausgewählt werden kann.

Innerhalb der Betriebsart "Bussystem" kann mittels des übergeordneten Bussystems der Motorstarter 11 in den Energiesparmodus geschaltet werden. Der Motorstarter 11 schaltet beispielsweise den über den Verbraucheranschluss 18 verbundenen Motor ab. Die Steuerhoheit am Motorstarter 11 liegt zu diesem Zeitpunkt bei dem Bussystem. Möchte nun ein Anwender für Testzwecke den mit dem Motorstarter 11 verbundenen Motor steuern, so kann dieser über das Schaltelement 14 während des Energiesparmodus die Steuerhoheit von dem Bussystem temporär zu dem Handsteuermittel 10 übertragen, so dass eine Steuerung des Motorstarters 11 über das Handsteuermittel 10, insbesondere über das Bedienelement 15 und/oder das Anschlussmittel 16 erfolgen kann. Hierfür muss der Anwender den Drehschalter des Schaltelements 14 auf die Betriebsart "Hand" stellen. Es ist ebenso denkbar, dass ein Schlüsselschalter anstelle des Drehschalters als Schaltelement 14 verwendet wird. Ein Anwender kann nach einer Betätigung des Schaltelements 14 nun beispielsweise über Tasten des Bedienelementes 15 einen Anlauf des Motors veranlassen. Der Anwender muss folglich nicht den Energiesparmodus, welcher durch das Bussystem bestimmt wurde, über das Bussystem deaktivieren, sondern kann direkt am Motorstarter 11 über das Schaltelement 14 und insbesondere über den Drehschalter die Steuerhoheit dem Handsteuermittel 10 zuweisen. Der Motorstarter 11 hat somit einen temporären Betriebsmodus eingenommen, in welchem die Steuerhoheit bei dem Handsteuermittel 10 liegt und der Motor über das Handsteuermittel 10 steuerbar ist. Vom übergeordneten Bussystem an den Motorstarter 11 gesandte Kommandos werden während dieses Zeitraums nicht direkt umgesetzt. Der Motorstarter 11 hinterlegt sich den letzten vom Bussystem erwünschten Modus des Motorstarters 11, so dass er bei einem Verlassen des vorliegenden temporären Betriebsmodus, in welchem die Steuerhoheit bei dem Handsteuermittel 10 liegt, automatisch den aktuell durch das Bussystem bestimmten Modus einnehmen kann. Erfolgt während des Zeitraums des temporären Betriebsmodus über das Handsteuermittel 10 keine Änderung seitens des übergeordneten Bussystems, so nimmt der Motorstarter 11 nach einem Verlassen des temporären Betriebsmodus erneut den Energiesparmodus des Motorstarters 11 ein, welcher auch davor vorlag. Erfolgte hingegen eine Änderung seitens des Bussystems während des temporären Betriebsmodus so wird bei einem Verlassen des temporären Betriebsmodus der letzte vom Bussystem bestimmte Modus (Betriebsmodus oder geänderter Energiesparmodus) eingenommen. Das Verlassen des temporären Betriebsmodus erfolgt über das Schaltelement 14. Hierfür ist über den Drehschalter in die Betriebsart "Bussystem" umzuschalten.

Besonders vorteilhaft ist, dass der Motorstarter 11 funktional so ausgebildet ist, dass er mit den vorhandenen Vorrichtungen/Kommandos zur "Hand"-Steuerung (Betriebsart über das Handsteuermittel 10) den übergeordneten Energiesparmodus vorübergehend deaktivieren kann. Die Deaktivierung (durch Wechsel der Steuerhoheit von der "Bussystem"-Steuerung zur "Hand"-Steuerung herbeigeführt) und anschließende Reaktivierung (durch Wechsel der Steuerhoheit von der "Hand"-Steuerung zurück zur "Bussystem"-Steuerung herbeigeführt) des per übergeordneten Kommando aktivierten Energiesparmodus wird dabei vom Motorstarter 11 automatisch durchgeführt. Während der vorübergehenden Deaktivierung des Energiesparmodus empfängt und verarbeitet der Motorstarter 11 weiterhin alle PROFIenergy Kommandos von der übergeordneten Steuerung. D.h., ein in der Deaktivierungsphase (temporärer Steuerhoheit seitens des Handsteuermittels 10) empfangenes PROFIenergy Kommando "End Pause", zur Beendigung des Energiesparmodus, führt bei der Rückgabe der Steuerhoheit an die Bussteuerung dazu, dass der Motorstarter 11 nicht wieder in den Energiesparmodus sondern direkt in den Betriebsmodus wechselt.

Für den Anwender ergibt sich damit grundsätzlich der Nutzen, dass er in seiner übergeordneten Steuerung bzw. in seinem Anwenderprogramm keinerlei Maßnahmen integrieren muss, wenn er den am Motorstarter 11 angeschlossenen Verbraucher trotz des übergeordneten Energiesparzustandes z.B. für Wartungsarbeiten, Testbetrieb oder Notbetrieb steuern möchte. Damit ergeben sich für den Anwender Vorteile und neue Nutzungsmöglichkeiten bezogen auf den gleichzeitigen Einsatz von übergeordneten Energiesparmaßnahmen (z.B. PROFIenergy) und Motorstartern 11. Der Hauptvorteil für den Anwender liegt darin, dass er im Anwenderprogramm seiner Steuerung keine Maßnahmen und Aufwendungen durchführen muss, um z.B. einen Verbraucher gezielt (Wartung, Test, Notlauf) steuern zu können, während sich die gesamte Anlage im Energiesparmodus befindet.

Bei einer Kommunikation mittels PROFIenergy kann der Energiesparmodus vom Bussystem durch ein Kommando "Start_Pause" herbeigeführt und durch ein Kommando "End_Pause" beendet werden.

Bei dem Motorstarter 11 ist ferner vorzugsweise folgendes zu beachten:
Das Wechseln in einen Energiesparmodus darf nur in der Betriebsart "Bussystem" (Bussteuerung hat die Steuerhoheit) erfolgen. Wird in der Betriebsart "Hand" das PROFIenergy-Kommando "Start_Pause" empfangen, so darf dieses nicht sofort, sondern erst nach dem Umschalten in die Betriebsart "Bussystem" ausgeführt werden. Ausnahme, vorher wurde bereits das PROFIenergy Kommando "End_Pause" empfangen. Beim Zurückschalten in die Betriebsart "Bussystem" muss der "vorher aktive" Energiesparmode automatisch wieder aktiviert werden, außer es wurde mittlerweile das Kommando "End_Pause" empfangen.

Durch eine optische Anzeige 12 wird dem Anwender vor Ort am Motorstarter 11 angezeigt, dass ein aktiver Energiesparmodus vorliegt.

Bei der Aktivierung des Energiesparmodus wird insbesondere das "betriebsmäßige" Ausschalten des Motors und des Bremsausgangs herbeigeführt ("Abkoppeln" der entsprechenden PAA-Bits der Steuerung; die restlichen PAA-Bits werden nicht abgekoppelt; PAA = Prozessabbild der Ausgänge). Mit "betriebsmäßig" ist gemeint, dass der Motorstarter 11 beim Ausschalten eventuell parametrierte Auslaufzeiten und Bremshaltezeiten ganz normal abarbeitet. Die restlichen Gerätefunktionen im Motorstarter 11 werden vom Energiesparmodus nicht beeinflusst.

Bei einem Empfangen des PROFIenergy-Kommandos "Start_Pause" muss der Motorstarter 11 die mit dem PROFIenergy-Kommando "Start Pause" mitgelieferte Pausenzeit hinsichtlich einer im Motorstarter 11 hinterlegten Schaltelementschaltzeit + einer eventuell parametrierten Sanftauslaufzeit beim Sanftstarter überprüfen und darf nur in den Energiesparmodus wechseln, wenn diese größer gleich der intern vorliegenden Zeit ist, weil nur dann ein Erreichen des Energiesparmodus (Motor abgeschaltet) real möglich ist. Der Motorstarter 11 braucht keinerlei Überprüfungen, z.B. hinsichtlich des Anlagenzustandes, durchführen, bevor er in den Energiesparmode wechseln darf. Der Anwender muss sicherstellen, dass der am Motorstarter 11 angeschlossene Antrieb ausgeschaltet werden darf, wenn er über die Steuerung das Kommando "Start_Pause" schickt.

FIG 2 zeigt eine schematische Darstellung einer Anlage. Diese Anlage umfasst eine Steuerung 1, ein Netzteil 2, ein erstes, zweites und drittes elektrisches Schaltgerät 3,4,5 und drei Verbraucher 9. Der Verbraucher 9 ist jeweils ein Motor. Das erste, zweite und dritte elektrische Schaltgerät 3,4,5 ist jeweils ein in FIG 1 abgebildeter Motorstarter.

Die einzelnen elektrischen Schaltgeräte 3,4,5 sind an ein PROFINET-Bussystem angeschlossen. Hierfür ist die Steuerung 1 über eine Bussystemleitung 6 mit dem Busanschluss 13 des ersten elektrischen Schaltgerätes 3 verbunden. Das erste elektrische Schaltgerät 3 ist mittels einer Bussystemleitung 6 mit dem zweiten elektrischen Schaltgerät 4 verbunden. Das zweite elektrische Schaltgerät 4 ist mittels einer Bussystemleitung 6 mit dem dritten Schaltgerät 5 verbunden. Das erste, zweite und dritte elektrische Schaltgerät 3,4,5 ist somit über mittels der Bussystemleitung 6 mit der Steuerung 1 verbunden, so dass die Steuerung 1 mit den einzelnen Schaltgeräten 3,4,5 kommunizieren kann und letztendlich die Steuerung der einzelnen Schaltgeräte 3,4,5 über die Steuerung 1 erfolgen kann. Das Bussystem ist hierbei das PROFINET-Bussystem, welches eine Kommunikation mittels PROFIenergy mit einschließt.

Die Energieversorgung des ersten, zweiten und dritten elektrischen Schaltgerätes 3,4,5 erfolgt über das Netzteil 2. Hierfür ist das Netzteil 2 mit einer Energieversorgungsleitung 7 mit dem ersten elektrischen Schaltgerät 3, das erste elektrische Schaltgerät 3 mit einer Energieversorgungsleitung 7 mit dem zweiten elektrischen Schaltgerät 4 und das zweite elektrische Schaltgerät 4 mit einer Energieversorgungsleitung 7 mit dem dritten elektrischen Schaltgerät 5 verbunden.

Das erste, zweite und dritte elektrische Schaltgerät 3,4,5 umfasst jeweils ein Handsteuermittel 10 und ist jeweils mittels einer Verbraucherenergieversorgungsleitung 8 mit dem zugehörigen Verbraucher 9 verbunden. Mittels des elektrischen Schaltgerätes 3,4,5 kann der mit ihm verbundene Verbraucher 9 (Motor) gesteuert werden.

Um Wartungsarbeiten an der Anlage z.B. innerhalb einer Betriebs- oder Fertigungspause, durchführen zu können, können alle Anlagenteilnehmer (erster, zweiter und dritter Motorstarter 3,4,5) zentral und übergeordnet vom Anwenderprogramm über PROFIenergy in den Energiesparmodus versetzt werden. Hierfür wird vom Bussystem an jeden Anlagenteilnehmer das PROFIenergy-Kommando "Start_Pause" mit einer entsprechenden Pausenzeit gesendet. Der jeweilige Motorstarter 3,4,5 überprüft die empfangene Pausenzeit und wechselt in einen für die Pausenzeit vorgesehenen Energiesparmodus. Beim Aktivieren des Energiesparmodus werden vom jeweiligen Motorstarter 3,4,5 die von der Steuerung 1 empfangenen PAA-Bits Motor-RECHTS, Motor-LINKS, BREMSE mit Null Überschrieben und damit der Motor und dessen Bremse abgeschaltet. Der Anwender hat nun die Möglichkeit seine Wartung bzw. Umbauarbeiten an seinem Anlagenteil bzw. Verbraucher 9 vorzunehmen. Zum Test bzw. Überprüfung seiner durchgeführten Wartungsarbeiten kann er sich mittels des Schaltelementes (Drehschalter) am jeweiligen Motorstarter 3,4,5 die Vorortsteuerhoheit holen (Betriebsart "Hand"). Ist beispielsweise ein Test am zweiten Motorstarter 4 erforderlich, so kann der Anwender gezielt mittels des Handsteuermittels 10 die "Hand"-Steuerung aktivieren, ohne, dass die anderen Motorstarter 3,5 den Energiesparmodus verlassen müssen. Der zweite Motorstarter 4 deaktiviert in diesem Fall automatisch den übergeordneten Energiesparmodus (Steuerhoheit beim "Bussystem") und ermöglicht dem Anwender den vom zweiten Motorstarter 4 gesteuerten Verbraucher 9 lokal über das Handsteuermittel 10 (z.B. über die Taster des Bedienelements 15) am zweiten Motorstarter 4 steuern zu können. Ein Aktivieren der gesamten Anlage ist nicht erforderlich, da gezielt am entsprechenden Motorstarter 4 eine "Hand"-Steuerung herbeigeführt werden kann. Nach dem Abschluss der Wartungsarbeiten kann der Anwender die Steuerhoheit für den zweiten Motorstarter 4 über das Schaltelement wieder an das Bussystem zurückgeben. In diesem Fall wird der Energiesparmodus vom zweiten Motorstarter 4 automatisch wieder aktiviert, es sei denn, der zweite Motorstarter 4 hat über die Steuerung 1 zwischenzeitlich das PROFIenergy-Kommando "End Pause" erhalten, welches den Energiesparmodus übergeordnet zurücknimmt.

## Patentansprüche

1. Elektrisches Schaltgerät (3,4,5,11), welches ein Handsteuermittel (10) und einen Busanschluss (13) zum Anschließen eines Bussystems umfasst, wobei das elektrische Schaltgerät (3,4,5,11) einen Betriebsmodus und einen Energiesparmodus einnehmen kann, wobei das elektrische Schaltgerät (3,4,5,11) derart ausgebildet ist, dass während eines Vorliegens des Energiesparmodus das elektrische Schaltgerät (3,4,5,11) mittels des Handsteuermittels (10) den Betriebsmodus einnehmen kann, so dass das elektrische Schaltgerät (3,4,5,11) über das Handsteuermittel (10) steuerbar ist.

2. Elektrisches Schaltgerät (3,4,5,11) nach Anspruch 1, wobei das elektrische Schaltgerät (3,4,5,11) derart ausgebildet ist, dass bei einem Verlassen des aus dem Energiesparmodus durch das Handsteuermittel (10) eingenommenen Betriebsmodus das elektrische Schaltgerät (3,4,5,11) automatisch einen aktuell durch das Bussystem bestimmten Modus einnimmt.

3. Elektrisches Schaltgerät (3,4,5,11) nach einem der vorhergehenden Ansprüche, wobei das elektrische Schaltgerät (3,4,5,11) dazu ausgebildet ist, dass bei einem Übergang vom Betriebsmodus in den Energiesparmodus mindestens eine Komponente des elektrischen Schaltgeräts (3,4,5,11) oder ein mit dem elektrischen Schaltgerät (3,4,5,11) verbundener Verbraucher (9) abgeschaltet wird.

4. Elektrisches Schaltgerät (3,4,5,11) nach einem der vorhergehenden Ansprüche, wobei der Energiesparmodus mehrere Energiesparvarianten umfassen kann und durch das Bussystem gezielt eine Energiesparvariante ansteuerbar ist.

5. Elektrisches Schaltgerät (3,4,5,11) nach einem der vorhergehenden Ansprüche, wobei das elektrische Schaltgerät (3,4,5,11) über ein herstellerunabhängiges Kommunikationsprotokoll, insbesondere PROFIenergy, in den Energiesparmodus schaltbar ist.

6. Elektrisches Schaltgerät (3,4,5,11) nach einem der vorhergehenden Ansprüche, wobei über ein Schaltelement (14), insbesondere über einen Schlüsselschalter, des Handsteuermittels (10) der Moduswechsel vom Energiesparmodus in den Betriebsmodus, in welchem eine Steuerung mittels des Handsteuermittels (10) erfolgen kann, herbeiführbar ist.

7. Elektrisches Schaltgerät (3,4,5,11) nach einem der vorhergehenden Ansprüche, wobei das Handsteuermittel (10) ein Anschlussmittel (16), zum Anschließen eines weiteren Gerätes, umfasst.

8. Elektrisches Schaltgerät (3,4,5,11) nach einem der vorhergehenden Ansprüche, wobei das elektrische Schaltgerät (3,4,5,11) ein Motorsteuergerät oder ein Motorstarter (11) ist.

9. Elektrisches Schaltgerät (3,4,5,11) nach einem der vorhergehenden Ansprüche, wobei das Bussystem ein PROFINET-Bussystem ist.

10. Elektrisches Schaltgerät (3,4,5,11) nach einem der vorhergehenden Ansprüche, mit einer Verarbeitungseinheit, welche dazu ausgebildet ist, Steuerkommandos des Bussystems und/oder des Handsteuermittels (10) zu verarbeiten und das elektrische Schaltgerät (3,4,5,11) innerhalb des Betriebsmodus und des Energiesparmodus zu steuern.

11. Verfahren zum Steuern eines elektrischen Schaltgeräts (3,4,5,11), welches ein Handsteuermittel (10) und einen Busanschluss (13) zum Anschließen eines Bussystems umfasst, wobei das elektrische Schaltgerät (3,4,5,11) einen Betriebsmodus und einen Energiesparmodus einnehmen kann, wobei das elektrische Schaltgerät (3,4,5,11) mittels des Bussystems in den Energiesparmodus geschaltet wird und aus dem Energiesparmodus über das Handsteuermittel (10) in den Betriebsmodus geschaltet wird, so dass während des Betriebsmodus eine Steuerung des elektrischen Schaltgeräts (3,4,5,11) mittels des Handsteuermittels (10) erfolgen kann.

12. Verfahren nach Anspruch 11, wobei das elektrische Schaltgerät (3,4,5,11) bei einem Verlassen des aus dem Energiesparmodus durch das Handsteuermittel (10) eingenommenen Betriebsmodus automatisch einen aktuell durch das Bussystem bestimmten Modus des elektrischen Schaltgerätes (3,4,5,11) einnimmt.

13. Verfahren nach einem der Ansprüche 11 bis 12, wobei bei einem Übergang vom Betriebsmodus in den Energiesparmodus mindestens eine Komponente des elektrischen Schaltgeräts (3,4,5, 11) oder ein mit dem elektrischen Schaltgerät (3,4,5,11) verbundener Verbraucher (9) abgeschaltet wird.

14. Verfahren nach einem der Ansprüche 11 bis 13, wobei der Energiesparmodus mehrere Energiesparvarianten umfasst und durch das Bussystem gezielt eine Energiesparvariante ansteuerbar ist.

15. Verfahren nach einem der Ansprüche 11 bis 14, wobei über ein Schaltelement (14), insbesondere über einen Schlüsselschalter, des Handsteuermittels (10) der Moduswechsel vom Energiesparmodus in den Betriebsmodus, in welchem eine Steuerung mittels des Handsteuermittels (10) erfolgen kann, herbeigeführt wird.

16. Verfahren nach einem der Ansprüche 11 bis 15, wobei das elektrische Schaltgerät (3,4,5,11) über ein herstellerunabhängiges Kommunikationsprotokoll, insbesondere PROFIenergy, in den Energiesparmodus schaltbar ist.
